# EUROPEAN PATENT APPLICATION

(11) **EP 1 932 659 A1**
(43) Date of publication of application: **18.06.2008**
(21) Application number: 07122568.4
(22) Date of filing: 06.12.2007
(51) Int. Cl.: B32B 3/24, F02C 7/045, G10K 11/162

(54) **Noise suppression panel with fluid rejection capability and methods of making the same**

(30) Priority: 14.12.2006 US 639832
(71) Applicant: Honeywell International Inc., Morristown, New Jersey 07962 (US)
(72) Inventor: Stevenson, James F., Morristown, NJ 07960 (US); Mendoza, Jeff M., Chandler, AZ 85249 (US); Brown, Daniel V., Surprise, AZ 85379 (US); Baker, Martin C., Budd Lake, NJ 07828 (US); Poandl, Lee, Middlesex, NJ 08846 (US)
(74) Representative: Buckley, Guy Julian

(57) **Abstract**

A noise suppression panel is provided that has fluid rejection capability and includes a face plate, a bulk absorber, a fluid repellant, and, a back plate. The face plate includes a perforated material. The bulk absorber is disposed between the face plate and the back plate. The fluid repellent is disposed on at least a portion of the face plate, the bulk absorber, or the back plate.

## Description

### TECHNICAL FIELD

The inventive subject matter relates to noise suppression panels and, more particularly, to noise suppression panels for use in aircraft ducts and plenums, and methods of making the panels.

### BACKGROUND

Many aircraft are powered by jet engines. In most instances, jet engines include one or more gas-powered turbine engines, auxiliary power units (APUs), and/or environmental control systems (ECSs), which can generate both thrust to propel the aircraft and electrical energy to power systems installed in the aircraft. Although most aircraft engines are generally safe, reliable, and efficient, the engines do exhibit certain drawbacks. For example, the turbine engines, as well as other components that make up the engine, can be sources of unwanted noise, especially during aircraft take-off and landing operations. Moreover, APUs and ECSs can be sources of unwanted ramp noise. Thus, various governmental rules and regulations aimed at mitigating such noise sources have been enacted.

To address, and at least somewhat alleviate, the unwanted noise emanating from aircraft noise sources, and to thereby comply with the above-noted rules and regulations, various types of noise reduction treatments have been developed. For example, one type of noise reduction treatment that has been developed for use in aircraft ducts is a noise suppression panel. In many instances, noise suppression panels are flat or contoured, and include either a bulk noise suppression material or a honeycomb structure disposed between a backing plate and a face plate. The noise suppression panels may be placed on the interior surface of engine or APU inlet and/or outlet plenums to reduce noise emanations.

Although the above-described noise suppression panels do exhibit fairly good noise suppression characteristics, the panels also exhibit certain drawbacks. For example, if the noise suppression panels are exposed to and retain fluids, the noise suppression characteristics of the panels may diminish. As a result, the panels may become ineffective. Additionally, if the bulk noise suppression material disposed within the panels is exposed to certain fluids, it may become degraded.

Hence, there is a need for a noise suppression panel that rejects or repels fluids and/or remains operable when exposed to fluids. It is further desired for the panel to be relatively inexpensive and easy to manufacture. The inventive subject matter addresses one or more of these needs.

### BRIEF SUMMARY

The inventive subject matter provides noise suppression panels with fluid rejection capability and methods of making the panels.

In one embodiment, and by way of example only, the noise suppression panel with fluid rejection capability includes a face plate, a back plate, a bulk absorber, and a fluid repellent. The face plate includes a perforated material. The bulk absorber is disposed between the face plate and the back plate. The fluid repellent is disposed on at least a portion of the face plate or the bulk absorber.

In another embodiment, and by way of example only, the noise suppression panel with fluid rejection capability includes a face plate, a back plate, a bulk absorber, and a fluid repellent. The face plate includes a perforated material having a percent open area value that is greater than about 30%. The bulk absorber is disposed between the face plate and the back plate and includes between about 3% and about 25% by weight of fibrillated microfibers, between about 20% and about 75% by weight of reinforcement microfibers, and between about 15% and about 60% by weight of a binder. The fluid repellent is disposed on at least a portion of the face plate or the bulk absorber.

In still another embodiment, and by way of example only, a method of manufacturing a noise suppression panel with fluid rejection capability is provided that includes forming a noise suppression panel, where the panel includes a face plate including a perforated material having a percent open area value that is greater than about 30%, a back plate, and a bulk absorber disposed between the face plate and the back plate. A first low surface energy coating is then deposited on at least a portion of the panel via a plasma chemical vapor deposition process.

Other independent features and advantages of the preferred panel and methods of manufacturing the panel will become apparent from the following detailed description, taken in conjunction with the accompanying drawings which illustrate, by way of example, the principles of the inventive subject matter.

### BRIEF DESCRIPTION OF THE DRAWINGS

FIG. 1 is a cross-sectional view of a noise suppression panel in accordance with an exemplary embodiment;

FIG. 2 is a cross-sectionl view of a noise suppression panel in accordance with another exemplary embodiment;

FIG. 3 is a method for treating the noise suppression panels of FIGs. 1 and 2 with a fluid repellent in accordance with an exemplary embodiment; and

FIG. 4 is a method for treating the exemplary noise suppression panels of FIGs. 1 and 2 with a fluid repellent in accordance with another exemplary embodiment.

### DETAILED DESCRIPTION OF A PREFERRED EMBODIMENT

Before proceeding with the detailed description, it is to be appreciated that the described embodiment is not limited to use in conjunction with a particular type of engine or in a particular type of vehicle. Thus, although the present embodiment is, for convenience of explanation, described as being implemented in an aircraft environment, it will be appreciated that it can be implemented in various other types of vehicles, and in various other systems and environments.

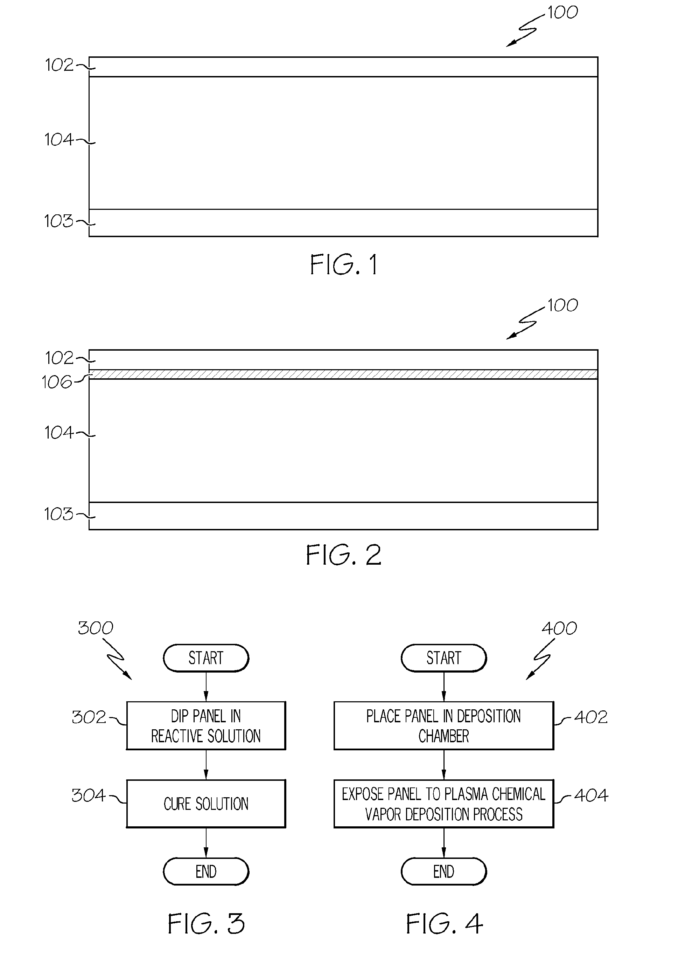

Turning now to the description and with reference first to FIG. 1, an exemplary hydrophobic noise suppression panel 100 is depicted in cross section. The panel 100 includes a face plate 102, a back plate 103, and a bulk absorber 104. The face plate 102 is preferably perforated to a desired percent open area (POA) value and may be constructed from any one of numerous types of materials to provide structural integrity to the panel 100. Some suitable materials include, but are not limited to, stainless steel and carbon composites. In one exemplary embodiment, the face plate 102 is constructed of stainless steel. As is generally known, relatively low POA values (e.g., ~5%) provide acoustic resistance, whereas relatively high POA values (e.g., ~30%) provide acoustic transparency. In a particular exemplary embodiment, the face plate 102 is perforated to a POA value greater than 30% to ensure acoustic transparency to any incident sound. The back plate 103 is preferably imperforate and is constructed of any one of numerous types of non-porous materials such as, for example, aluminum, epoxy, or bismaleimide (BMI).

The bulk absorber 104 is disposed between the face plate 102 and the back plate 103 and is configured to absorb noise. In this regard, the bulk absorber 104 may be any one of numerous types of suitable noise-reducing materials. In one exemplary embodiment, the bulk absorber 104 is a needle-punched fiber mat. The fiber mat may be made of carbon fibers, and may be available through Zoltek Companies, Inc. of St. Louis, Missouri. The fiber mat may alternatively be made of volcanic basalt-based materials, such as Sudaglass® available through Sudaglass Fiber Technology, Inc. of Houston, Texas.

In another exemplary embodiment, the bulk absorber 104 is made up of a fiber-based acoustic treatment material. The material may be a random network of reinforcement microfibers and fibrillated microfibers loosely held together by a polymer binder. The bulk absorber 104 preferably has a volume fraction solids of between about 1.5% and about 5.5%, and more preferably about 4%. The reinforcement microfibers and fibrillated microfibers are included in the bulk absorber 104 at a 1:1 to 15:1 ratio, by weight. The binder is included at approximately a 0.20:1 ratio to about a 1.5:1 ratio, by weight, to the microfibers. Consequently, the bulk absorber 104 includes between about 3% and about 25% by weight of fibrillated microfibers, between about 20% and about 75% by weight of reinforcement microfibers, and between about 15% and about 60% by weight of the binder.

The reinforcement microfibers are relatively stiff, smooth, and linear fibers that are capable of absorbing noise. Any one of numerous suitable acoustic-reducing microfibers may be employed. In one exemplary embodiment, the reinforcement microfibers include carbon, and may be, for example polyacrylonitrile (PAN) based carbon fibers such as Thornel® T-300 PAN sold by Cytec Industries Inc. of West Paterson, NJ. In another exemplary embodiment, basalt microfibers are used. One exemplary basalt microfiber that may be used is provided under the tradename Sudaglass® and is available through Sudaglass Fiber Technology, Inc. of Houston, Texas.

The fibrillated microfibers enable forming a network with the reinforcement fibers where the fibers have no preferred orientation. In this regard, the fibrillated microfibers are highly branched and are capable of intertwining with the linear reinforcing microfibers to form a fluffy mass with the 1.5-5.5% volume fraction solids mentioned above. Several fibrillated microfibers may be suitably employed. In one exemplary embodiment, the fibrillated microfibers are fibrillated aramid microfibers. The fibrillated aramid microfibers, also known in the art as fibrillated poly(aromatic amide) microfibers are capable of maintaining integrity at temperatures of at least 280°C and are available from E.I. DuPont de Nemours of Delaware under the tradename Kevlar® pulp. Another suitable fibrillated microfiber is, as an example, acrylic pulp.

To provide the random microfiber network with sufficient mechanical integrity for disposal in the panel 100, the binder, which may be, for example, a polymer, is included. The polymer binder may be any one of numerous suitable materials that can hold the microfibers together but does not significantly decrease the size of the openings in the random microfiber network. Suitable thermoset polymer binders include, but are not limited to polymeric resins and powdered phenolic binders, such as Durite® binders AD- 3239 or AD-5614 available through Hexion Specialty Chemicals of Columbus, OH, Thermoplastic powder binders, such as those that include polyvinyl chloride and polyethylene, may alternatively be used.

No matter the particular material, the bulk absorber 104 may include a fluid repellent. The fluid repellent is at least partially made up of a material having a surface energy of less than about 15 erg/cm². Such materials are generally known in the art as "low surface energy materials". In one exemplary embodiment, the fiber mat or the fiber-based acoustic treatment material is dipped in a liquid-form of a low surface energy material, such as a fluoropolymer. In another exemplary embodiment, the low surface energy material is sprayed onto the fiber mat or the fiber-based acoustic treatment material.

In some embodiments, an intermediate layer 106 may be included, as shown in FIG. 2. In such an embodiment, the intermediate layer 106 is disposed between the face plate 102 and the bulk absorber 104 and is included to provide fluid repellency. In this regard, the intermediate layer 106 may be made of any one of numerous fluid repelling materials. For example, the intermediate layer 106 may be made of polyetheretherketone or a fluoropolymer, such as Teflon® available through E.I. DuPont de Nemours of Delaware. In other embodiments, the intermediate layer 106 may be a fine screen or mesh, such as between about a 40x40 mesh and a 120x120 mesh, of a metallic material, such as aluminum. The mesh may be coated or treated with a low surface energy coating, such as a fluoropolymer. Suitable fluoropolymers include, but are not limited to, Fluorepel^{™} 501PF available through Cytonix Corporation of Beltsville, MD.

In another exemplary embodiment, the panel 100 may be further treated to include a fluid repellent. For example, outer surfaces of the panel 100 may be coated, sprayed, or infused with the fluid repellent. The fluid repellent may be a low surface energy coating, such as a fluoropolymer, and may not be similar to that used to treat the bulk absorber 104.
In one exemplary embodiment, the fluid repellent is a particle coating on the panel 100 that includes micron or submicron size hydrophobic particles, which are optionally held in place by a binder. The particles may be fumed silica and the binder may be a phenolic resin or an adhesive. Suitable binders include rubber-to-metal bonding adhesives, such as a Chemlok® adhesive available through the Lord Corporation of Cary, NC, high temperature binders such as those from ZYP Coatings, Inc. of Oak Ridge, NT, or polysilazane resins, such as those available from KiON Corporation of Willow Grove, PA. The particle coatings exhibit excellent hydrophobic characteristics and are generally more resistant to elevated temperatures than chemical based low surface energy materials such as fluorocarbons. Another class of low surface energy coatings is polysilazane clear coats. One suitable polysilazane clear coat includes KiON® Anti-Graffiti Clear Coat from KiON Corporation in Willow Grove, PA. The particle coatings may include a fluoropolymer coating for enhanced effectiveness in rejecting organic based liquids, such as jet fuel.

One exemplary method 300 by which the panel 100 may be treated with the fluid repellent is shown in FIG. 3. Here, a metal surface of the panel is dipped into a reactive solution to form a coating, step 302. Dip coating may occur by dipping the panel 100 into a solution including particles and alcohol. In one exemplary embodiment, the solution includes about 5% by weight of phenolic powder, about 5% by weight of fumed silica, and 90% by weight of isopropyl alcohol. The solution coating the panel 100 is then cured, step 304.

In another exemplary method 400 shown in FIG. 4, the panel 100 is treated by being subjected to a plasma vapor deposition process 400. First, the panel 100 is placed in a deposition chamber, step 402. The panel 100 may include the face plate 102 and bulk absorber 104, or the face plate 102, bulk absorber 104, and the intermediate layer 106. Next, the panel 100 is exposed to a plasma chemical vapor deposition process, step 404. The plasma chemical vapor deposition process is preferably a low pressure, low temperature process, for example having a pressure of less than about 20 milliTorr and a temperature of less than about 40°C. One vendor of plasma deposition processes is P2i of Abington, Oxfordshire, UK. A low surface energy material is introduced into the deposition chamber as plasma, causing the low surface energy coating to penetrate the panel 100 and to bond in a thin layer to the surface. Any one of numerous low surface energy coatings may be used, such as, for example, fluoropolymers including perfluoroacrylate. Additionally, in embodiments in which one or more of the panel components includes a low surface energy coating, the low surface energy coating employed in this process 400 may or may not have a similar composition to that of the panel component low surface energy coating. Moreover, although this process 400 is described as being applied to the panel 100, it will be appreciated that it may be applied to one or more components of the panel 100, such as to the face plate 102, back plate 103, bulk absorber 104, or the intermediate layer 106.

There has now been provided a noise suppression panel that may be more effective in repelling fluids as compared to known materials. Additionally, the noise suppression panel may be relatively inexpensive to manufacture and may remain effective over a relatively wide frequency range. Moreover, in embodiments that include the combination of the reinforcement microfibers with the fibrillated microfibers, the panel may have an average sound absorption coefficient that is about 32% higher than a known high quality noise-reducing foam.

While the inventive subject matter has been described with reference to a preferred embodiment, it will be understood by those skilled in the art that various changes may be made and equivalents may be substituted for elements thereof without departing from the scope of the inventive subject matter. In addition, many modifications may be made to adapt to a particular situation or material to the teachings of the inventive subject matter without departing from the essential scope thereof. Therefore, it is intended that the inventive subject matter not be limited to the particular embodiment disclosed as the best mode contemplated for carrying out this inventive subject matter, but that the inventive subject matter will include all embodiments falling within the scope of the appended claims.

## Claims

1. A noise suppression panel (100) with fluid rejection capability comprising:
a face plate (102) comprising a perforated material;
a back plate (103);
a bulk absorber (104) disposed between the face plate (102) and the back plate (103); and
a fluid repellent disposed on at least a portion of the face plate (102), the back plate (103), or the bulk absorber (104).

2. The panel (100) of claim 1, wherein the bulk absorber comprises:
between about 3% and about 25% by weight of fibrillated microfibers;
between about 20% and about 75% by weight of reinforcement microfibers; and
between about 15% and about 60% by weight of a binder.

3. The panel (100) of claim 2, wherein the reinforcement microfibers comprise carbon fibers.

4. The panel (100) of claim 2, wherein the reinforcement microfibers comprise basalt fibers.

5. The panel (100) of claim 2, wherein the material is configured to have a volume fraction solids of between about 1.5% and about 5.5%.

6. The panel (100) of claim 1, wherein the bulk absorber comprises a needle-punched mat.

7. The panel (100) of claim 1, wherein the fluid repellent comprises a coating having a surface energy of less than about 15 erg/cm².

8. The panel (100) of claim 7, wherein the coating comprises a fluoropolymer.

9. The panel (100) of claim 1, wherein the fluid repellent treatment comprises an intermediate layer (106) disposed between the face plate (102) and the bulk absorber (104), and the intermediate layer (106) comprises a material selected from the group consisting of a metallic mesh, a polyetheretherketone woven fabric, and a fluoropolymer woven fabric.

10. The panel (100) of claim 1, wherein the fluid repellent comprises a coating comprising particles held in place by a binder.
